# DEMANDE DE BREVET EUROPEEN

(11) **EP 1 292 151 A2**
(43) Date de publication de la demande: **12.03.2003**
(21) Numéro de dépôt: 02292131.6
(22) Date de dépôt: 29.08.2002
(51) Int. Cl.: H04N 7/26, H04N 7/50

(54) **Procédé de compression d'images d'animations**

(30) Priorité: 07.09.2001 FR 0111583
(71) Demandeur: ALCATEL, 75008 Paris (FR)
(72) Inventeur: Fourquin, Xavier, 92310 Sevres (FR); Comps, Christophe, 31000 Toulouse (FR)
(74) Mandataire: Lamoureux, Bernard

(57) **Abrégé**

La présente invention consiste en un procédé de compression d'images animées affichées sur un écran défini par une trame de pixels, en particulier un écran de téléphone portable.

II consiste à utiliser un premier algorithme pour la compression d'une image dont le pourcentage de pixels modifiés par rapport à l'image affichée précédente est supérieur ou égal à un seuil déterminé et un second algorithme pour la compression d'une image dont le pourcentage de pixels modifiés par rapport à l'image affichée précédente est inférieur ou égal audit seuil

## Description

La présente invention se rapporte à un procédé de compression d'images d'animations.

Elle a pour application préférée la téléphonie mobile mais peut s'appliquer dans d'autres applications.

De plus en plus sont et seront utilisées dans les applications multimédia des téléphones portables des images animées plus ou moins complexes, destinées par exemple à des jeux ou à des messages symbolisés.

Les formats actuellement utilisés sont définis par la norme GSM/EMS (Global System for Mobile communications / Enhanced Messaging Service), 3GPP TS23.040 v5.00. Elle prévoit le format GIF (Graphic Interchange Format en anglais).

Le format WBMP de la norme GSM/EMS est un format utilisé pour les images animées ou fixes, couramment non compressées. La compression/décompression éventuelle des données y est prévue avec un seul algorithme dérivé du LZSS. Cet algorithme est basé sur la construction d'un « alphabet » de suites de valeurs de données, classées selon leur fréquence d'apparition dans le flux. Il n'est pas adapté à la compression et surtout la décompression d'animations pour les téléphones mobiles compte tenu de sa complexité et de sa puissance de calcul et est donc inutilisé.

Le format GIF est un format d'images compressé mais n'a pas pour but intrinsèque la compression d'images animées et nécessite une forte puissance de calcul. Il est en conséquence peu adapté à la téléphonie mobile.

Le but de l'invention est de proposer un procédé de compression d'images minimisant la puissance de calcul et la mémoire nécessaire et de ce fait permettant d'établir un bon compromis entre la faible puissance de calcul des téléphones portables et l'amélioration souhaitable du temps de transfert et de la bande passante des communications.

Ceci est important pour les opérateurs, en effet le transfert de telles images occupe les possibilités de communication et transfert déjà chargées.

Ceci est également important pour les utilisateurs, pour une optimisation de leur appareil et également de leurs temps de transfert et donc du coût résultant, en cas de transfert d'applications à partir d'Internet par exemple.

Pour ce faire, l'invention consiste en un procédé de compression d'images animées affichées sur un écran défini par une trame de pixels, en particulier un écran de téléphone portable, caractérisé en ce qu'il consiste à utiliser un premier algorithme pour la compression d'une image dont le pourcentage de pixels modifiés par rapport à l'image affichée précédente est supérieur ou égal à un seuil déterminé et un second algorithme pour la compression d'une image dont le pourcentage de pixels modifiés par rapport à l'image affichée précédente est inférieur ou égal audit seuil.

Selon le mode de réalisation préféré, le second algorithme définit les positions des pixels modifiés entre l'image précédente affichée et l'image modifiée.

Plus précisément, le second algorithme consiste à coder une image modifiée relativement à une image précédente affichée en enregistrant une liste de couples d'informations, où la première information est la position relative d'une modification entre les deux images et la seconde information est la donnée de modification.

De préférence, ladite première information est la position relative du pixel suivant modifié par rapport à la position du pixel précédemment modifié et la seconde information est la valeur à cette position.

La valeur est ici définie par les couleurs des pixels et ses attributs du type clignotant, souligné, etc, selon que cette valeur les définisse pour un ou plusieurs pixels.

Selon le mode de réalisation préféré, le premier algorithme définit des ensembles de données identiques.

Plus précisément, le premier algorithme consiste à coder une image en enregistrant une liste de couples d'informations, où la première information est la longueur de données identiques et la seconde information est la donnée.

De préférence, la première information est le nombre de pixels adjacents identiques et ladite seconde information est la valeur de ces pixels.

Avantageusement, ledit seuil est sensiblement égal à 50%.
De préférence, le procédé consiste à :
- Compresser la première image à l'aide du premier algorithme ;
- Analyser chaque image suivante pour définir le pourcentage de pixels modifiés par rapport à l'image affichée précédente ;
- Comparer ce pourcentage avec ledit seuil ;
- Choisir en conséquence l'algorithme de compression
   L'invention concerne également un procédé de compression d'images animées affichées sur un écran défini par une trame de pixels, en particulier un écran de téléphone portable , caractérisé en ce qu'il consiste à :

- Compresser la première image à l'aide d'un premier algorithme ;
- Compresser les images suivantes à l'aide de ce premier algorithme et d'un second algorithme et comparer les performances de chacun des algorithmes ;
- Choisir l'algorithme de compression le plus performant, le premier algorithme définissant des ensembles de données identiques et le second algorithme définissant les positions des pixels modifiés entre l'image précédente affichée et l'image modifiée.

Selon un mode de réalisation préféré, premier et second algorithmes sont ceux déjà précisés.

L'invention concerne également les algorithmes pour la mise en oeuvre du procédé.

Selon l'invention, le procédé de compression d'images animées affichées sur un écran défini par une trame de pixels consiste à utiliser un premier algorithme pour la compression d'une image dont le pourcentage de pixels modifiés par rapport à l'image affichée précédente est supérieur ou égal à un seuil déterminé et un second algorithme pour la compression d'une image dont le pourcentage de pixels modifiés par rapport à l'image affichée précédente est inférieur ou égal audit seuil. Avantageusement, ledit seuil est sensiblement égal à 50%.

Une animation est composée d'images qui sont affichées sur l'écran les unes après les autres et qui peuvent être plus ou moins différentes, en forme, en position et en dimension, les unes des autres. Cette modification d'une image à la suivante peut être définie par le pourcentage de pixels modifiés par rapport à l'image affichée précédente.

Une compression optimale suppose une adaptation de l'algorithme de compression en fonction de ce pourcentage.

A cet effet, l'invention propose deux algorithmes de compression.

Le premier algorithme est un algorithme de compression que l'on peut qualifier de statique : il réalise une complète définition de l'écran à chaque image. Ci-après, on lui donnera le code d'entêté « image complète ».

Le second algorithme est un algorithme de compression que l'on peut qualifier de dynamique : il réalise une définition relative de l'image en fonction de l'image précédente affichée. Ci-après, on lui donnera le code d'entêté « image relative ».

Plus précisément, le premier algorithme consiste à coder une image en enregistrant une liste de couples d'informations (N, V), où la première information N est le nombre de pixels adjacents identiques et la seconde information V est la donnée, classiquement la valeur de ces pixels.

Le second algorithme consiste à coder une image modifiée relativement à une image précédente affichée en enregistrant une liste de couples d'informations (P, V), où la première information P est la position relative du pixel suivant modifié par rapport à la position du pixel précédemment modifié et la seconde information V est la donnée de modification, classiquement la valeur à cette position.

Pour permettre la décompression, les commandes du programme contiennent des données d'entêté comprenant: le code de l'algorithme (« image complète » compressée - premier algorithme - ou « image relative» compressée - second algorithme -), la largeur et la longueur de l'image.

Dans le cas du premier algorithme, le décodage consiste à déployer les couples de données (N, V).

Dans le cas du second algorithme, le décodage consiste à cibler dans l'image précédente affichée les pixels à modifier et à les afficher directement dans la mémoire où est stockée l'image précédente.

L'exemple simplifié suivant illustre ces algorithmes.

On considère deux images d'une animation pour par exemple un écran de 256 couleurs sur une zone écran de 4 x 4 pixels.

En mode non compressé, les listes des attributs sont les suivantes :
- Image 1 : (4,4) 1,1,1,3,3,0,0,0,0,2,2,127,127,63,63,63
- Image 2 : (4,4) 1,1,1,2,3,1,0,0,0,0,2,127,127, 0,63,63.

Soit un espace mémoire de 2 bytes pour l'entête et 16 bytes pour les données pour chaque image soit au total 36 bytes.

A l'état compressé en mode « image complète », l'image 1 est définie par :
- (image complète), (4,4)(3,1)(2,3)(4,0)(2,2)(2,127)(3,63) soit 15 bytes ;

A l'état compressé en mode « image relative », l'image 2 est définie par :
- (image relative), (4,4)(3,2)(2,1)(4,0)(4,0) soit 11 bytes.

En mode compressé, les deux images ont une taille réduite en mémoire de 36 à 26 bytes soit de 28%.

A l'intérieur d'un même programme d'images d'animation, le choix de l'algorithme peut être réalisé de deux façons, la façon empirique ou la façon expérimentale.
Selon la façon empirique, le procédé consiste à :
- Compresser la première image à l'aide du premier algorithme ;
- Analyser chaque image suivante pour définir le pourcentage de pixels modifiés par rapport à l'image affichée précédente ;
- Comparer ce pourcentage avec ledit seuil ;
- Choisir en conséquence l'algorithme de compression.

Selon la façon expérimentale, le procédé consiste à :
- Compresser la première image à l'aide du premier algorithme ;
- Compresser les images suivantes à l'aide des deux algorithmes et comparer les performances de chacun des algorithmes ;
- Choisir l'algorithme de compression le plus performant.

La taille des images compressées varie de l'une à l'autre. Il existe plusieurs façons de définir la fin de l'image pour le programme de décompression :
- La longueur des données compressées est stockée dans l'entête ; cette façon est préférée dans les cas où toutes les images non compressées ont la même taille ;
- La longueur des données décompressés est stockée dans l'entête ou connue par le programme de décompression en tant que paramètre ; cette façon est préférée lorsque la taille des images varie des unes aux autres et est obligatoire pour les images complètement définies ;
- La longueur et la largeur de l'image écran sont stockées ou connues dynamiquement par le programme de décompression en tant que paramètres. C'est le cas illustré dans l'exemple précédemment décrit.

Le procédé de compression peut fournir dans certains cas rares très spécifiques, dans le cas d'enchaînement d'images géométriques très complexes, plus de données en sortie qu'en entrée. Il doit donc pouvoir désigner des images non compressées, c'est_à-dire qu'à tout niveau de décision, au lieu d'utiliser le premier algorithme ou le second algorithme, il est peut être décidé de sauvegarder l'image telle quelle sans compression. Ce cas n'a pas été précisé dans la description du procédé ci-dessus, ne modifiant pas fondamentalement l'objet de l'invention et étant résolu par les connaissances de base de l'homme du métier.

## Revendications

1. Procédé de compression d'images animées affichées sur un écran défini par une trame de pixels, en particulier un écran de téléphone portable, **caractérisé en ce qu'**il consiste à utiliser un premier algorithme pour la compression d'une image dont le pourcentage de pixels modifiés par rapport à l'image affichée précédente est supérieur ou égal à un seuil déterminé et un second algorithme pour la compression d'une image dont le pourcentage de pixels modifiés par rapport à l'image affichée précédente est inférieur ou égal audit seuil.

2. Procédé selon la revendication 1, **caractérisé en ce que** le second algorithme définit les positions des pixels modifiés entre l'image précédente affichée et l'image modifiée.

3. Procédé selon la revendication 2, **caractérisé en ce que** le second algorithme consiste à coder une image modifiée relativement à une image précédente affichée en enregistrant une liste de couples d'informations (P, V), où la première information (P) est la position relative d'une modification entre les deux images et la seconde information (V) est la donnée de modification.

4. Procédé selon la revendication 3, **caractérisé en ce que** ladite première information (P) est la position relative du pixel suivant modifié par rapport à la position du pixel précédemment modifié et la seconde information (V) est la valeur à cette position.

5. Procédé selon l'une quelconque des revendications précédentes, **caractérisé en ce que** le premier algorithme définit des ensembles de données identiques.

6. Procédé selon la revendication 5, **caractérisé en ce que** le premier algorithme consiste à coder une image en enregistrant une liste de couples d'informations (N, V), où la première information (N) est la longueur de données identiques et la seconde information (V) est la donnée.

7. Procédé selon la revendication 6, **caractérisé en ce que** la première information (N) est le nombre de pixels adjacents identiques et ladite seconde information est la valeur de ces pixels.

8. Procédé selon l'une des revendications précédentes, **caractérisé en ce que** ledit seuil est sensiblement égal à 50%.

9. Procédé selon l'une quelconque des revendications précédentes, **caractérisé en ce qu'**il consiste à :
• Compresser la première image à l'aide du premier algorithme ;
• Analyser chaque image suivante pour définir le pourcentage de pixels modifiés par rapport à l'image affichée précédente ;
• Comparer ce pourcentage avec ledit seuil ;
• Choisir en conséquence l'algorithme de compression.

10. Procédé de compression d'images animées affichées sur un écran défini par une trame de pixels, en particulier un écran de téléphone portable , **caractérisé en ce qu'**il consiste à :
• Compresser la première image à l'aide d'un premier algorithme ;
• Compresser les images suivantes à l'aide de ce premier algorithme et d'un second algorithme et comparer les performances de chacun des algorithmes ;
• Choisir l'algorithme de compression le plus performant,
le premier algorithme définissant des ensembles de données identiques et le second algorithme définissant les positions des pixels modifiés entre l'image précédente affichée et l'image modifiée.

11. Procédé selon la revendication 10, **caractérisé en ce que** le second algorithme consiste à coder une image modifiée relativement à une image précédente affichée en enregistrant une liste de couples d'informations (P, V), où la première information (P) est la position relative d'une modification entre les deux images et la seconde information (V) est la donnée de modification.

12. Procédé selon la revendication 11, **caractérisé en ce que** ladite première information (P) est la position relative du pixel suivant modifié par rapport à la position du pixel précédemment modifié et la seconde information (V) est la valeur à cette position.

13. Procédé selon l'une des revendications 10 à 12, **caractérisé en ce que** le premier algorithme consiste à coder une image en enregistrant une liste de couples d'informations (N, V), où la première information (N) est la longueur de données identiques et la seconde information (V) est la donnée.

14. Procédé selon la revendication 13, **caractérisé en ce que** la première information (N) est le nombre de pixels adjacents identiques et ladite seconde information est la valeur de ces pixels.

15. Dispositif pour la mise en oeuvre du procédé selon l'une quelconque des revendications précédentes comportant un algorithme, **caractérisé en ce qu'**il définit les positions des pixels modifiés entre l'image précédente affichée et l'image modifiée.

16. Dispositif selon la revendication 15, **caractérisé en ce qu'**il consiste à coder une image modifiée relativement à une image précédente affichée en enregistrant une liste de couples d'informations (P, V), où la première information (P) est la position relative d'une modification entre les deux images et la seconde information (V) est la donnée de modification.

17. Dispositif selon la revendication 16, **caractérisé en ce que** ladite première information (P) est la position relative du pixel suivant modifié par rapport à la position du pixel précédemment modifié et la seconde information (V) est la valeur à cette position.

18. Dispositif pour la mise en oeuvre du procédé selon l'une quelconque des revendications 1 à 14 comportant un algorithme, **caractérisé en ce qu'**il définit des ensembles de données identiques.

19. Dispositif selon la revendication 18, **caractérisé en ce qu'**il consiste à coder une image en enregistrant une liste de couples d'informations (N, V), où la première information (N) est la longueur de données identiques et la seconde information (V) est la donnée.

20. Dispositif selon la revendication 19, **caractérisé en ce que** la première information (N) est le nombre de pixels adjacents identiques et ladite seconde information est la valeur de ces pixels.
